# FASCICULE DE BREVET EUROPEEN

(11) **EP 3 319 188 B1**
(45) Date de publication et mention de la délivrance du brevet: **10.03.2021**
(21) Numéro de dépôt: 17199236.5
(22) Date de dépôt: 30.10.2017
(51) Int. Cl.: H02B 1/30, H02B 13/025

(54) **SYSTÈME D'ASSEMBLAGE D'ARMOIRES ÉLECTRIQUES D'UN TABLEAU ÉLECTRIQUE**
SYSTEM ZUM ZUSAMMENBAU VON ELEKTRISCHEN SCHALTSCHRÄNKEN EINER ELEKTRISCHEN SCHALTANLAGE
SYSTEM FOR ASSEMBLING ELECTRICAL CABINETS OF AN ELECTRICAL SWITCHBOARD

(30) Priorité: 02.11.2016 FR 1660589
(43) Date de publication de la demande: 09.05.2018
(73) Titulaire: Schneider Electric Industries SAS, 92500 Rueil-Malmaison (FR)
(72) Inventeur: MALLIER, Yvan, 38050 GRENOBLE Cedex 9 (FR); VERPILLOT, Bertrand, 38050 GRENOBLE Cedex 9 (FR)
(74) Mandataire: Brevalex

(56) Documents cités:
- EP-A2- 2 429 046
- JP-A- 2000 184 519
- JP-A- 2008 061 464
- JP-U- S5 315 025
- US-A- 5 813 791

## Description

### DOMAINE TECHNIQUE

La présente invention se rapporte au domaine des armoires électriques de tableaux électriques, et notamment aux solutions de fixation de telles armoires entre elles.

L'invention est tout particulièrement concernée par les armoires électriques se présentant sous la forme de cellules modulaires équipées d'appareillages fixes ou débrochables, sous enveloppe métallique, à isolement dans l'air ou dans un gaz. De telles cellules, ou armoires, peuvent par exemple permettre de réaliser la partie haute tension des postes de transformation HT/BT de distribution et des postes de livraison ou de répartition haute tension. Dans la présente demande, l'expression « haute tension » signifie une tension supérieure à 1000 Volts.

### ÉTAT DE LA TECHNIQUE ANTÉRIEURE

De façon classique, l'assemblage des armoires électriques entre elles d'un tableau électrique se fait généralement par l'usage de boulons et d'écrous.

Or, cette solution n'est pas entièrement satisfaisante compte-tenu des contraintes d'installation sur site. En effet, il est souvent difficile de pouvoir assembler les parties arrières du tableau électrique sur le lieu d'installation en raison principalement de difficultés d'accès si bien que les installateurs préfèrent parfois réduire l'utilisation des boulons et des écrous. En conséquence, les performances des armoires électriques, notamment en cas d'arc interne, ne sont plus assurées.

JP 2008-061464 A, JP 2000-184519 A et EP 2 429 046 A2 divulguent par ailleurs des exemples de systèmes d'assemblage d'armoires électriques.

### EXPOSÉ DE L'INVENTION

L'invention a ainsi pour but de remédier au moins partiellement aux besoins mentionnés ci-dessus et aux inconvénients relatifs aux réalisations de l'art antérieur.

L'invention a ainsi pour objet, selon l'un de ses aspects, un tableau électrique comprenant au moins deux armoires électriques assemblées par au moins un système d'assemblage selon les caractéristiques de la revendication 1.

Autrement dit encore, chaque rail d'assemblage est apte à être glissé verticalement le long de l'ensemble formé par la réunion d'un premier rebord de fixation d'une première armoire électrique et d'un deuxième rebord de fixation d'une deuxième armoire électrique, les premier et deuxième rebords de fixation étant adjacents et les première et deuxième armoires électriques étant adjacentes, lesdits premier et deuxième rebords de fixation étant situés à l'intérieur de l'ouverture d'insertion.

De plus, par « arêtes verticales », il faut comprendre les deux arêtes de la face arrière de chaque armoire électrique qui sont horizontalement espacées l'une de l'autre et formées à l'intersection entre la face arrière et les faces latérales de ladite armoire électrique.

Grâce à l'invention, il est possible d'accélérer le processus d'assemblage d'armoires électriques d'un tableau électrique et également de réduire les coûts d'installation, en éliminant autant de boulons et d'écrous que possible lors de l'installation, tout en garantissant la robustesse suffisante de la partie arrière du tableau électrique. De plus, l'invention, même si elle l'autorise, permet de limiter la déformation de la partie arrière d'une armoire électrique sous l'effet de la pression des gaz en cas d'arc interne. En effet, elle permet d'éviter le risque de déchirure de la plaque arrière sous l'effet de la pression des gaz au travers d'une absorption de l'énergie par déformation. En outre, la forme spécifique des éléments du système d'assemblage selon l'invention permet de diriger d'éventuels gaz en cas d'arc interne vers le haut ou vers le bas de sorte à protéger la présence possible de personnels à l'arrière du tableau électrique. De plus, cette solution permet de filtrer des particules incandescentes et des gaz chauds, et de les refroidir. Enfin, la solution de l'invention permet de réduire la surface de prise au sol du tableau électrique, car elle permet de réduire la distance entre le mur et la partie arrière du tableau jusqu'à environ 100 mm, au lieu de parfois 500 mm pour qu'un installateur puisse monter correctement les cellules entre elles. Ceci est donc très appréciable pour gérer au mieux les surfaces au sol.

Chaque rail d'assemblage est ainsi formé par la réunion d'au moins deux, voire trois, voire quatre, voire encore cinq, éléments de rail. De préférence, le rail d'assemblage comporte trois ou quatre éléments de rail.

En effet, de façon habituelle, la pièce où les armoires électriques sont destinées à être installées peut présenter des dimensions restreintes, et par exemple une faible hauteur sous plafond. En conséquence, il peut s'avérer difficile de pouvoir utiliser un rail d'assemblage de grande longueur verticale, par exemple d'environ 2 m, pour fixer les armoires électriques ensemble. De plus, il est également difficilement concevable de glisser le rail d'assemblage entre deux armoires électriques adjacentes avant de les positionner sur leur lieu d'installation. Aussi, selon l'invention, la réalisation d'un rail d'assemblage en plusieurs éléments de rail réunis entre eux permet leur introduction successive, un par un, entre deux armoires électriques adjacentes en s'affranchissant des contraintes de place.

Selon l'invention, les éléments de rail sont clipsés les uns aux autres de sorte que l'assemblage des éléments de rail entre eux peut être réalisé à force, sans outils spécifiques ou bien à l'aide d'un seul maillet par exemple.

Les éléments de rail peuvent avoir ou non les mêmes dimensions, notamment la même longueur verticale.

Chaque rail d'assemblage peut être métallique, notamment réalisé en acier, par exemple d'épaisseur d'environ 2 mm.

Le rapport entre la largeur horizontale de l'ouverture d'insertion d'un rail d'assemblage et la largeur horizontale du rail d'assemblage peut par exemple être inférieur ou égal à 0,1.

Par ailleurs, chaque rail d'assemblage peut présenter sensiblement, en section horizontale, une forme de C.

De plus, chaque rebord de fixation peut comprendre une partie d'accroche s'étendant sensiblement parallèlement à la face arrière de l'armoire électrique, de sorte que l'ensemble formé par la réunion de deux rebords de fixation de deux armoires électriques adjacentes forme sensiblement, en section horizontale, une forme de T.

En outre, le système peut préférentiellement comporter une pluralité de plaques de fixation arrière, notamment métalliques, chacune fixée sur la face arrière de la partie arrière d'une armoire électrique, s'étendant verticalement le long de la face arrière de la partie arrière de ladite armoire électrique, chaque plaque de fixation arrière comprenant, au niveau de chacun de ses deux bords verticaux, autrement dit ses deux bords opposés s'étendant verticalement le long de la face arrière de la partie arrière de ladite armoire électrique et étant espacés horizontalement l'un de l'autre, un rebord de fixation s'étendant verticalement le long de la face arrière de la partie arrière de ladite armoire électrique et comprenant une partie d'accroche s'étendant sensiblement parallèlement à la plaque de fixation arrière, de sorte que l'ensemble formé par la réunion de deux rebords de fixation de deux armoires électriques adjacentes forme sensiblement, en section horizontale, une forme de T.

De plus, chaque plaque de fixation arrière peut présenter sensiblement, en section horizontale, une forme de C.

Par ailleurs, l'invention a encore pour objet, selon un autre de ses aspects, un procédé d'assemblage d'au moins deux armoires électriques d'un tableau électrique selon les caractéristiques de la revendication 6.

En outre, le procédé peut alors comporter la succession d'étapes suivantes :
- glissement d'un n-ième élément de rail verticalement le long de l'ensemble formé par la réunion des deux rebords de fixation des deux armoires électriques adjacentes entraînant le glissement des (n-1) éléments de rail déjà fixés audit n-ième élément de rail, ce glissement étant réalisé partiellement de sorte qu'une partie supérieure dudit n-ième élément de rail ne soit pas au contact dudit ensemble de deux rebords de fixation,
- fixation d'un (n+1)-ième élément de rail sur ledit n-ième élément de rail, au niveau de ladite partie supérieure dudit n-ième élément de rail,
- glissement du (n+1)-ième élément de rail verticalement le long de l'ensemble formé par la réunion des deux rebords de fixation des deux armoires électriques adjacentes entraînant le glissement des n éléments de rail fixés audit (n+1)-ième élément de rail, ce glissement étant réalisé totalement lorsque le (n+1)-ième élément de rail constitue le dernier élément de rail à assembler du rail d'assemblage ou partiellement de sorte qu'une partie supérieure dudit (n+1)-ième élément de rail ne soit pas au contact dudit ensemble de deux rebords de fixation dans le cas contraire, n étant un nombre entier supérieur ou égal à 2.

Le système d'assemblage selon l'invention et le procédé selon l'invention peuvent comporter l'une quelconque des caractéristiques précédemment énoncées, prises isolément ou selon toutes combinaisons techniquement possibles avec d'autres caractéristiques, conformément aux revendications.

### BRÈVE DESCRIPTION DES DESSINS

L'invention pourra être mieux comprise à la lecture de la description détaillée qui va suivre, d'un exemple de mise en œuvre non limitatif de celle-ci, ainsi qu'à l'examen des figures, schématiques et partielles, du dessin annexé, sur lequel :
- la figure 1 illustre, en vue de dessus, un exemple de tableau électrique comportant quatre armoires électriques assemblées entre elles par le biais d'un système d'assemblage,
- les figures 2A et 2B illustrent, respectivement en configuration d'assemblage et en configuration assemblée, un exemple de rail d'assemblage d'un système d'assemblage conforme à l'invention comprenant trois éléments de rail,
- la figure 3 illustre, en perspective, un exemple de mise en place d'un rail d'assemblage entre deux armoires électriques adjacentes d'un tableau électrique,
- la figure 3A est une vue selon A de la figure 3,
- les figures 4A et 4B représentent, en perspective et respectivement selon des vues avant et arrière, un exemple d'élément de rail d'un rail d'assemblage d'un système d'assemblage conforme à l'invention,
- la figure 5 est une vue analogue à celle de la figure 1 visant à illustrer la déformation du système d'assemblage en cas d'arc interne,
- la figure 6 illustre de façon isolée la déformation subie par le rail d'assemblage déformé de la figure 5,
- les figures 7A à 7C illustrent des étapes successives du procédé d'assemblage d'un système d'assemblage conforme à l'invention, et
- la figure 8 illustre, de façon isolée en perspective, la fixation par clipsage de deux éléments de rail du système d'assemblage représenté sur les figures 7A à 7C.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ D'UN MODE DE RÉALISATION PARTICULIER

Dans toute la description, il est à noter que les termes «avant», «arrière», «haut», «bas», «vertical» et «horizontal» sont à comprendre en considérant le positionnement normal des armoires électriques 2 d'un tableau électrique 10 sur le sol lors de leur installation.

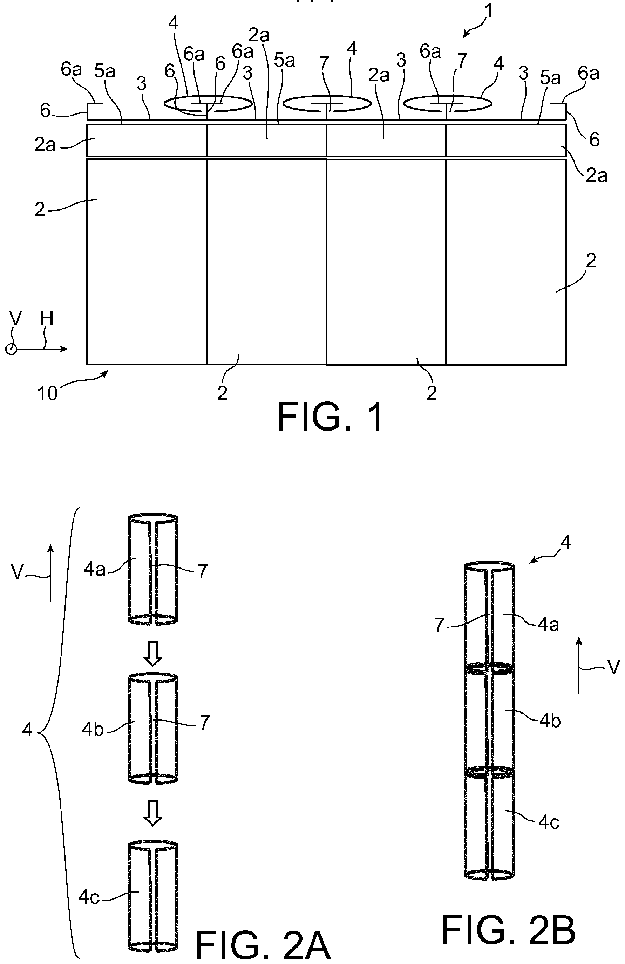

Il est par ailleurs à noter que, sur les figures 1-3 et 5-7A, l'axe H représente l'axe horizontal tandis que l'axe V représente l'axe vertical.

En référence à la figure 1, on a illustré un exemple de tableau électrique 10 comprenant quatre armoires électriques 2 assemblées entre elles par le biais d'un système d'assemblage 1 conforme à l'invention.

Conformément à l'invention, le système d'assemblage 1 comporte quatre plaques métalliques de fixation arrière 3. Chaque plaque de fixation arrière 3 est fixée sur la face arrière 5a de la partie arrière 2a de chaque armoire électrique 2.

De plus, chaque plaque de fixation arrière 3 s'étend verticalement le long de la face arrière 5a de la partie arrière 2a de l'armoire électrique correspondante et présentant sensiblement, en section horizontale, une forme de C. Cette forme de C implique également que la plaque de fixation arrière 3 définit approximativement une rainure verticale en T.

De façon avantageuse, chaque plaque de fixation arrière 3 comprend, au niveau de chacun de ses deux bords verticaux, un rebord de fixation 6 s'étendant verticalement le long de la face arrière 5a de la partie arrière 2a de l'armoire électrique 2 correspondante.

Chaque rebord de fixation 6 comporte par ailleurs une partie d'accroche 6a qui s'étend sensiblement parallèlement à la plaque de fixation arrière 3, comme visible sur la figure 1.

Par ailleurs, le système d'assemblage 1 selon l'invention comporte également trois rails d'assemblage 4 pour fixer deux à deux les quatre armoires électriques 2.

Chaque rail d'assemblage 4 présente sensiblement, en section horizontale, une forme de C. De plus, chaque rail d'assemblage 4 comprend une ouverture d'insertion 7 qui s'étend verticalement le long du rail d'assemblage 4.

Lorsque deux armoires électriques 2 sont mises côte à côte, les rebords de fixation 6 adjacents des deux armoires électriques 2 forment ensemble un motif d'assemblage présentant, en section horizontale, une forme de T.

Alors, l'assemblage des deux armoires électriques 2 entre elles est réalisé par coulissement d'un rail d'assemblage 4 verticalement le long de l'ensemble formé par la réunion des deux rebords de fixation 6 adjacents, lesquels sont situés dans l'ouverture d'insertion 7.

Selon l'invention, afin de pouvoir permettre l'assemblage des armoires électriques 2 en dépit de possibles contraintes d'espace comme expliqué précédemment, chaque rail d'assemblage 4 est constitué par l'assemblage de plusieurs éléments de rail 4a, 4b, 4c, ici clipsés les uns aux autres.

Les figures 2A et 2B permettent d'illustrer très schématiquement cet assemblage par réunion de trois éléments de rails 4a, 4b, 4c pour former un rail d'assemblage 4.

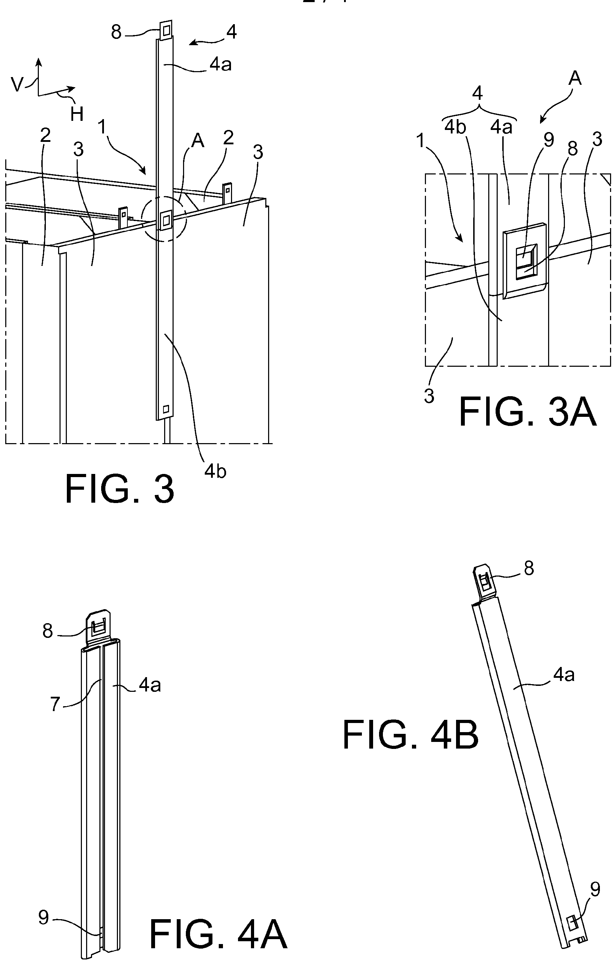

En outre, les figures 3, 3A, 4A et 4B permettent de visualiser plus précisément les éléments permettant le clipsage des éléments de rail 4a, 4b, 4c entre eux pour former un rail d'assemblage 4.

Ainsi, chaque élément de rail 4a, 4b, 4c comporte, à l'une de ses extrémités verticales, une languette de clipsage 8 et, à l'autre de ses extrémités verticales, une ouverture de clipsage 9.

Chaque languette de clipsage 8 d'un élément de rail 4a, 4b, 4c est alors apte à venir s'insérer dans une ouverture de clipsage 9 d'un autre élément de rail 4a, 4b, 4c. L'assemblage des éléments de rail 4a, 4b, 4c peut ainsi se faire sans outillage spécifique, si ce n'est à l'aide de la force d'un maillet par exemple.

Par ailleurs, comme visible sur la figure 1, chaque rail d'assemblage 4 présente sensiblement, en section horizontale, une forme de C permettant de venir entourer l'ensemble formé par deux rebords de fixation 6 adjacents de deux armoires électriques 2 adjacentes.

De façon avantageuse, comme indiqué auparavant, l'invention permet de limiter la déformation de la partie arrière d'une armoire électrique 2 sous l'effet de la pression des gaz en cas d'arc interne.

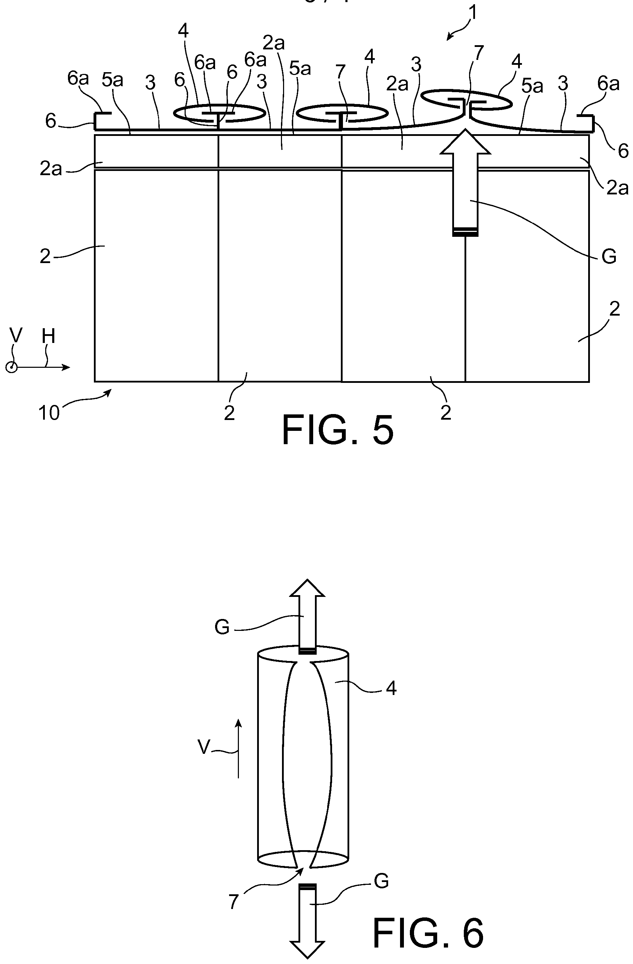

Les figures 5 et 6 permettent d'illustrer cet avantage, les flèches G permettant d'illustrer le sens de circulation des gaz. Ainsi, les plaques de fixation arrière 3 et les rails d'assemblage 4 sont aptes à se déformer en cas d'arc interne afin d'éviter le risque de déchirure des plaques de fixation arrière sous l'effet de la pression des gaz. L'énergie est donc absorbée par déformation. De plus, la forme spécifique des rails d'assemblage 4 permet de diriger les gaz vers le haut ou vers le bas de sorte à protéger la présence possible de personnels à l'arrière du tableau électrique 10, comme visible sur la figure 6.

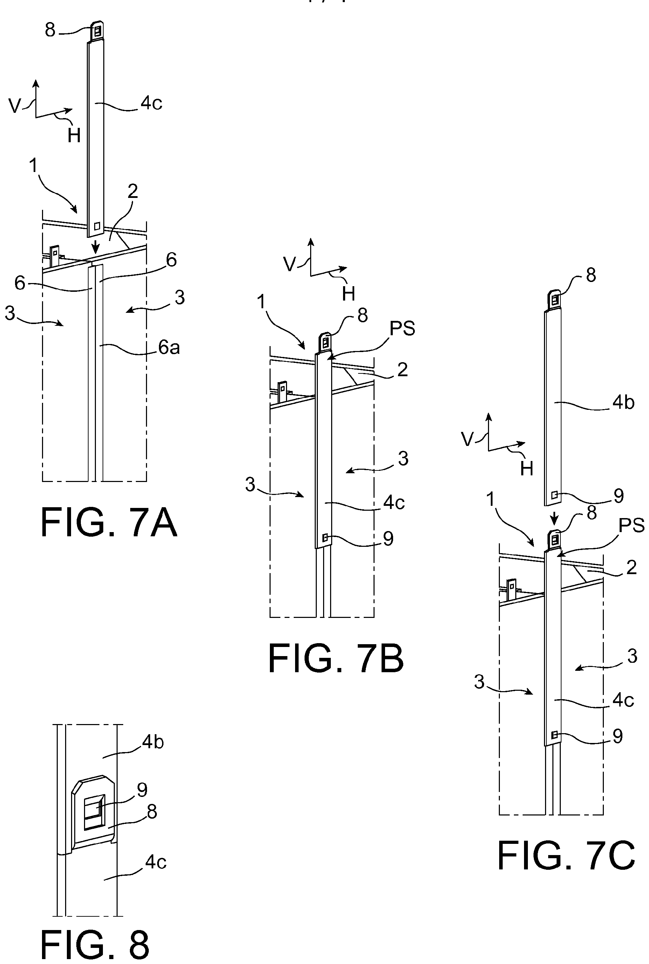

Par ailleurs, les figures 7A à 7C permettent d'illustrer diverses étapes mises en œuvre lors de l'assemblage des éléments de rail 4a, 4b, 4c pour former un rail d'assemblage 4.

Ainsi, après positionnement de deux armoires électriques 2 de façon adjacente l'une par rapport à l'autre de sorte à réunir ensemble un rebord de fixation 6 de l'une des armoires électriques 2 avec un rebord de fixation 6 de l'autre des armoires électriques 2, on procède au coulissement d'un élément de rail 4c, comme représenté sur la figure 7A, verticalement le long de l'ensemble formé par la réunion des deux rebords de fixation 6, lesquels sont situés à l'intérieur de l'ouverture d'insertion 7 de l'élément de rail 4c.

Le coulissement est réalisé partiellement de sorte qu'une partie supérieure PS de l'élément de rail 4c reste au-dessus des deux armoires électriques 2, sans entrer au contact des deux rebords de fixation 6, comme représenté sur la figure 7B. De cette façon, on facilite l'assemblage de l'élément de rail 4b suivant.

Ainsi, dans cette configuration de la figure 7B, on vient ensuite fixer l'élément de rail 4b sur l'élément de rail 4c, comme représenté sur la figure 7C, par insertion de la languette de clipsage 9 de l'élément de rail 4b dans l'ouverture de clipsage 8 de l'élément de rail 4c. On obtient alors la configuration de la figure 8 représentative de la fixation obtenue entre les éléments de rail 4b et 4c.

Puis, un coulissement de l'élément de rail 4b, fixé à l'élément de rail 4c, est réalisé de façon partielle, comme précédemment, pour pouvoir venir fixer le dernier élément de rail 4a. Ensuite, l'ensemble des trois éléments de rail 4a, 4b, 4c coulisse totalement le long des rebords de fixation 6 pour obtenir l'assemblage final du rail d'assemblage 4 et ainsi l'assemblage final des deux armoires électriques 2 du tableau électrique 10. Ce procédé est alors répété autant de fois que nécessaire pour permettre l'assemblage de toutes les armoires électriques 2 deux par deux.

Bien entendu, l'invention n'est pas limitée à l'exemple de réalisation qui vient d'être décrit. Diverses modifications peuvent y être apportées par l'homme du métier, tant qu'elles font partie de l'étendue de protection définie par les revendications.

## Revendications

1. Tableau électrique (10) comprenant au moins deux armoires électriques (2), les armoires électriques (2) étant assemblées ensemble par au moins un système d'assemblage (1), comportant :
- un rebord de fixation (6) au niveau de chacune des deux arêtes verticales d'une face arrière (5a) de chaque armoire électrique (2), ledit rebord de fixation (6) s'étendant verticalement le long de ladite face arrière (5a) de ladite armoire électrique (2),
- un ou plusieurs rails d'assemblage (4), comprenant chacun une ouverture d'insertion (7) s'étendant verticalement le long du rail d'assemblage (4), chaque rail d'assemblage (4) étant apte à être glissé verticalement le long de l'ensemble formé par la réunion de deux rebords de fixation (6) de deux armoires électriques (2) adjacentes, lesdits deux rebords de fixation (6) étant situés à l'intérieur de l'ouverture d'insertion (7), **caractérisé en ce que** chaque rail d'assemblage (4) est formé par l'assemblage vertical d'une pluralité d'éléments de rail (4a, 4b, 4c), chaque élément de rail (4a, 4b, 4c) comportant, à l'une de ses extrémités verticales, une languette de clipsage (8) et, à l'autre de ses extrémités verticales, une ouverture de clipsage (9), chaque languette de clipsage (8) d'un élément de rail (4a, 4b, 4c) étant apte à venir s'insérer dans une ouverture de clipsage (9) d'un autre élément de rail (4a, 4b, 4c).

2. Tableau électrique selon la revendication 1, **caractérisé en ce que** chaque rail d'assemblage (4) présente sensiblement, en section horizontale, une forme de C.

3. Tableau électrique selon la revendication 1 ou 2, **caractérisé en ce que** chaque rebord de fixation (6) comprend une partie d'accroché (6a) s'étendant sensiblement parallèlement à la face arrière (5a) de l'armoire électrique (2), de sorte que l'ensemble formé par la réunion de deux rebords de fixation (6) de deux armoires électriques (2) adjacentes forme sensiblement, en section horizontale, une forme de T.

4. Tableau électrique selon l'une quelconque des revendications précédentes, **caractérisé en ce que** le système d'assemblage (1) comporte une pluralité de plaques de fixation arrière (3), chacune fixée sur la face arrière (5a) de la partie arrière (2a) d'une armoire électrique (2), s'étendant verticalement le long de la face arrière (5a) de la partie arrière (2a) de ladite armoire électrique (2), chaque plaque de fixation arrière (3) comprenant, au niveau de chacun de ses deux bords verticaux, le rebord de fixation (6) s'étendant verticalement le long de la face arrière (5a) de la partie arrière (2a) de ladite armoire électrique (2) et comprenant une partie d'accroché (6a) s'étendant sensiblement parallèlement à la plaque de fixation arrière (3), de sorte que l'ensemble formé par la réunion de deux rebords de fixation (6) de deux armoires électriques (2) adjacentes forme sensiblement, en section horizontale, une forme de T.

5. Tableau électrique selon la revendication 4, **caractérisé en ce que** chaque plaque de fixation arrière (3) présente sensiblement, en section horizontale, une forme de C.

6. Procédé d'assemblage d'au moins deux armoires électriques (2) d'un tableau électrique (10) selon l'une quelconque des revendications précédentes, le procédé comportant les étapes suivantes :
- positionner deux armoires électriques (2) de façon adjacente l'une par rapport à l'autre de sorte à réunir ensemble un rebord de fixation (6) de l'une des armoires électriques (2) avec un rebord de fixation (6) de l'autre des armoires électriques (2),
- glisser un rail d'assemblage (4) verticalement le long de l'ensemble formé par la réunion des deux rebords de fixation (6) des deux armoires électriques (2) adjacentes, lesdits deux rebords de fixation (6) étant situés à l'intérieur de l'ouverture d'insertion (7) du rail d'assemblage (4),
et en ce que, le rail d'assemblage (4) étant formé par l'assemblage vertical d'une pluralité d'éléments de rail (4a, 4b, 4c), le procédé comporte l'étape de glissement successif des éléments de rail (4a, 4b, 4c) un par un le long de l'ensemble formé par la réunion des deux rebords de fixation (6) des deux armoires électriques (2) adjacentes et de clipsage successif des éléments de rail (4a, 4b, 4c) entre eux.

7. Procédé d'assemblage selon la revendication 6, le procédé comportant la succession d'étapes suivantes :
- glissement d'un n-ième élément de rail (4b) verticalement le long de l'ensemble formé par la réunion des deux rebords de fixation (6) des deux armoires électriques (2) adjacentes entraînant le glissement des (n-1) éléments de rail (4c) déjà fixés audit n-ième élément de rail (4b), ce glissement étant réalisé partiellement de sorte qu'une partie supérieure dudit n-ième élément de rail (4b) ne soit pas au contact dudit ensemble de deux rebords de fixation (6),
- fixation d'un (n+1)-ième élément de rail (4a) sur ledit n-ième élément de rail (4b), au niveau de ladite partie supérieure dudit n-ième élément de rail (4b),
- glissement du (n+1)-ième élément de rail (4a) verticalement le long de l'ensemble formé par la réunion des deux rebords de fixation (6) des deux armoires électriques (2) adjacentes entraînant le glissement des n éléments de rail (4b, 4c) fixés audit (n+1)-ième élément de rail (4a), ce glissement étant réalisé totalement lorsque le (n+1)-ième élément de rail (4a) constitue le dernier élément de rail (4a) à assembler du rail d'assemblage (4) ou partiellement de sorte qu'une partie supérieure dudit (n+1)-ième élément de rail (4a) ne soit pas au contact dudit ensemble de deux rebords de fixation (6) dans le cas contraire,
n étant un nombre entier supérieur ou égal à 2.

## Patentansprüche

1. Elektrischer Verteiler (10) mit zumindest zwei Schaltschränken (2), wobei die Schaltschränke (2) mittels zumindest eines Montagesystems (1) zusammenmontiert sind, enthaltend:
- einen Befestigungsflansch (6) an jeder der beiden vertikalen Kanten einer Rückseite (5a) jedes Schaltschranks (2), wobei sich der Befestigungsflansch (6) vertikal entlang der Rückseite (5a) des Schaltschranks (2) erstreckt,
- eine oder mehrere Montageschienen (4), die jeweils eine sich vertikal entlang der Montageschiene (4) erstreckende Einführöffnung (7) aufweisen, wobei jede Montageschiene (4) vertikal entlang der durch das Zusammenfügen von zwei Befestigungsflanschen (6) zweier aneinandergrenzender Schaltschränke (2) gebildeten Anordnung verschiebbar ist, wobei die beiden Befestigungsflansche (6) innerhalb der Einführöffnung (7) liegen,
**dadurch gekennzeichnet, dass**
jede Montageschiene (4) durch das vertikale Montieren einer Vielzahl von Schienenelementen (4a, 4b, 4c) gebildet ist, wobei jedes Schienenelement (4a, 4b, 4c) an einem seiner vertikalen Enden eine Einrastlasche (8) und am anderen seiner vertikalen Enden eine Einrastöffnung (9) aufweist, wobei jede Einrastlasche (9) eines Schienenelements (4a, 4b, 4c) dazu geeignet ist, sich in eine Einrastöffnung (9) eines weiteren Schienenelements (4a, 4b, 4c) einzufügen.

2. Elektrischer Verteiler nach Anspruch 1, **dadurch gekennzeichnet, dass** jede Montageschiene (4) im horizontalen Schnitt im Wesentlichen eine C-Form aufweist.

3. Elektrischer Verteiler nach Anspruch 1 oder 2, **dadurch gekennzeichnet, dass** jeder Befestigungsflansch (6) einen Hakenabschnitt (6a) aufweist, der sich im Wesentlichen parallel zur Rückseite (5a) des Schaltschranks (2) erstreckt, so dass die durch das Zusammenfügen von zwei Befestigungsflanschen (6) zweier aneinandergrenzender Schaltschränke (2) gebildete Anordnung im horizontalen Schnitt im Wesentlichen eine T-Form bildet.

4. Elektrischer Verteiler nach einem der vorangehenden Ansprüche, **dadurch gekennzeichnet, dass** das Montagesystem (1) eine Vielzahl von hinteren Befestigungsplatten (3) enthält, die jeweils an der Rückseite (5a) des hinteren Abschnitts (2a) eines Schaltschranks (2) befestigt sind und sich vertikal entlang der Rückseite (5a) des hinteren Abschnitts (2a) des Schaltschranks (2) erstrecken, wobei jede hintere Befestigungsplatte (3) an jedem ihrer beiden vertikalen Ränder den Befestigungsflansch (6) enthält, der sich vertikal entlang der Rückseite (5a) des hinteren Abschnitts (2a) des Schaltschranks (2) erstreckt und einen Hakenabschnitt (6a) aufweist, der sich im Wesentlichen parallel zu der hinteren Befestigungsplatte (3) erstreckt, so dass die durch das Zusammenfügen von zwei Befestigungsflanschen (6) zweier aneinandergrenzender Schaltschränke (2) gebildete Anordnung im horizontalen Schnitt im Wesentlichen eine T-Form bildet.

5. Elektrischer Verteiler nach Anspruch 4, **dadurch gekennzeichnet, dass** jede hintere Befestigungsplatte (3) im horizontalen Schnitt im Wesentlichen eine C-Form aufweist.

6. Verfahren zum Montieren von zumindest zwei Schaltschränken (2) eines elektrischen Verteilers (10) nach einem der vorangehenden Ansprüche, wobei das Verfahren die nachstehenden Schritte umfasst:
- aneinandergrenzendes Positionieren zweier Schaltschränke (2), um einen Befestigungsflansch (6) des einen Schaltschrankes (2) mit einem Befestigungsflansch (6) des anderen Schaltschrankes (2) zusammenzufügen,
- Verschieben einer Montageschiene (4) vertikal entlang der aus dem Zusammenfügen der beiden Befestigungsflansche (6) der beiden aneinandergrenzenden Schaltschränke (2) gebildeten Anordnung, wobei die beiden Befestigungsflansche (6) innerhalb der Einführungsöffnung (7) der Montageschiene (4) liegen,
und dass
bei der durch die vertikale Montage einer Vielzahl von Schienenelementen (4a, 4b, 4c) gebildeten Montageschiene (4) das Verfahren den Schritt des aufeinanderfolgenden Verschiebens der Schienenelemente (4a, 4b, 4c) eines nach dem anderen entlang der durch das Zusammenfügen der beiden Befestigungsflansche (6) der beiden aneinandergrenzenden Schaltschränke (2) gebildeten Anordnung und des aufeinanderfolgenden Verrastens der Schienenelemente (4a, 4b, 4c) miteinander umfasst.

7. Montageverfahren nach Anspruch 6, wobei das Verfahren die Abfolge nachstehender Schritte umfasst:
- Verschieben eines n-ten Schienenelements (4b) vertikal entlang der Anordnung, die durch das Zusammenfügen der beiden Befestigungsflansche (6) der beiden aneinandergrenzenden Schaltschränke (2) gebildet ist, wodurch das Verschieben der (n-1) Schienenelemente (4c) bewirkt wird, die bereits an dem n-ten Schienenelement (4b) befestigt sind, wobei dieses Verschieben teilweise derart erfolgt, dass ein oberer Abschnitt des n-ten Schienenelements (4b) nicht in Kontakt mit der Anordnung der beiden Befestigungsflansche (6) gelangt,
- Befestigen eines (n+1)-ten Schienenelements (4a) an dem n-ten Schienenelement (4b) an dem oberen Abschnitt des n-ten Schienenelements (4b),
- Verschieben des (n+1)-ten Schienenelements (4a) vertikal entlang der Anordnung, die durch das Zusammenfügen der beiden Befestigungsflansche (6) der beiden aneinandergrenzenden Schaltschränke (2) gebildet ist, wodurch das Verschieben der n Schienenelemente (4b, 4c), die an dem (n+1)-ten Schienenelement (4a) befestigt sind, bewirkt wird, wobei dieses Verschieben dann vollständig erfolgt, wenn das (n+1)-te Schienenelement (4a) das zuletzt zu montierende Schienenelement (4a) der Montageschiene (4) darstellt, oder andernfalls teilweise erfolgt, so dass ein oberer Abschnitt des (n+1)-ten Schienenelements (4a) nicht in Kontakt mit der Anordnung aus zwei Befestigungsflanschen (6) gelangt,
wobei n eine ganze Zahl größer oder gleich 2 ist.

## Claims

1. An electrical switchboard (10) comprising at least two electrical cabinets (2), the electrical cabinets (2) being assembled together by at least one assembling system (1), including:
- a fastening flange (6) at each of two vertical ridges of a rear face (5a) of each electrical cabinet (2), said fastening flange (6) extending vertically along said rear face (5a) of said electrical cabinet (2),
- one or more assembling rails (4), each comprising an inserting opening (7) extending vertically along the assembling rail (4),
each assembling rail (4) being able to be slid vertically along the assembly formed by joining two fastening flanges (6) of two adjacent electrical cabinets (2), said two fastening flanges (6) being located inside the inserting opening (7),
**characterised in that** each assembling rail (4) is formed by vertically assembling a plurality of rail elements (4a, 4b, 4c), each rail element (4a, 4b, 4c) including, at one of its vertical ends, a snap-on tab (8) and, at the other of its vertical ends, a snap-on opening (9), each snap-on tab (8) of a rail element (4a, 4b, 4c) being able to be inserted into a snap-on opening (9) of another rail element (4a, 4b, 4c).

2. The electrical switchboard according to claim 1, **characterised in that** each assembling rail (4) substantially has a horizontal cross-section C-shape.

3. The electrical switchboard according to claim 1 or 2, **characterised in that** each fastening flange (6) comprises a hooking part (6a) extending substantially parallel to the rear face (5a) of the electrical cabinet (2), so that the assembly formed by joining two fastening flanges (6) of two adjacent electrical cabinets (2) substantially forms a horizontal cross-section T-shape.

4. The electrical switchboard according to any of the previous claims, **characterised in that** the assembling system (1) includes a plurality of rear fastening plates (3), each being fastened to the rear face (5a) of the rear part (2a) of an electrical cabinet (2), extending vertically along the rear face (5a) of the rear part (2a) of said electrical cabinet (2), each rear fastening plate (3) comprising, at each of its two vertical edges, the fastening flange (6) extending vertically along the rear face (5a) of the rear part (2a) of said electrical cabinet (2) and comprising a hooking part (6a) extending substantially parallel to the rear fastening plate (3), so that the assembly formed by joining two fastening flanges (6) of two adjacent electrical cabinets (2) substantially forms a horizontal cross-section T-shape.

5. The electrical switchboard according to claim 4, **characterised in that** each rear fastening plate (3) substantially has a horizontal cross-section C-shape.

6. A method for assembling at least two electrical cabinets (2) of an electrical switchboard (10) according to any of the previous claims, the method including the following steps of:
- positioning two electrical cabinets (2) adjacent to each other so as to join together a fastening flange (6) of one of the electrical cabinets (2) to a fastening flange (6) of the other of the electrical cabinets (2),
- sliding an assembling rail (4) vertically along the assembly formed by joining both fastening flanges (6) of both adjacent electrical cabinets (2), said two fastening flanges (6) being located inside the inserting opening (7) of the assembling rail (4),
and in that, the assembling rail (4) being formed by vertically assembling a plurality of rail elements (4a, 4b, 4c), the method including the step of successively sliding the rail elements (4a, 4b, 4c) one by one along the assembly formed by joining both fastening flanges (6) of both adjacent electrical cabinets (2) and of successively snapping on the rail elements (4a, 4b, 4c) to one another.

7. The assembling method according to claim 6, the method including the succession of following steps:
- sliding an n^{th} rail element (4b) vertically along the assembly formed by joining both fastening flanges (6) of both adjacent electrical cabinets (2) causing sliding of the (n-1) rail elements (4c) already fastened to said n^{th} rail element (4b), this sliding being partially performed so that an upper part of said n^{th} rail element (4b) is not in contact with said assembly of two fastening flanges (6),
- fastening an (n+1)^{th} rail element (4a) to said n^{th} rail element (4b), at said upper part of said n^{th} rail element (4b),
- sliding the (n+1)^{th} rail element (4a) vertically along the assembly formed by joining both fastening flanges (6) of both adjacent electrical cabinets (2) causing sliding of the n rail elements (4b, 4c) fastened to said (n+1)^{th} rail element (4a), this sliding being totally performed when the (n+1)^{th} rail element (4a) is the last rail element (4a) to be assembled of the assembling rail (4) or partially performed so that an upper part of said (n+1)^{th} rail element (4a) is not in contact with said assembly of two fastening flanges (6) otherwise,
n being an integer greater than or equal to 2.
